# EUROPEAN PATENT SPECIFICATION

(11) **EP 1 271 138 B1**
(45) Date of publication and mention of the grant of the patent: **05.05.2010**
(21) Application number: 02254350.8
(22) Date of filing: 21.06.2002
(51) Int. Cl.: G01N 27/64, H01J 49/42

(54) **Quadrupole mass filter synchronised with an ion mobility spectrometer**
Quadrupol-massenfilter synchronisiert mit einem Ionenmobilitätsspektrometer
Filtre de masse quadrupolaire synchronisé avec un spectromètre à mobilité ionique

(30) Priority: 21.06.2001 GB 0115203; 27.02.2002 GB 0204601
(43) Date of publication of application: 02.01.2003
(60) Divisional application: 08005288.9
(73) Proprietor: Micromass UK Limited, Manchester M22 5PP (GB)
(72) Inventor: Bateman, Robert Harold, Parkfield House, Chechire WA16 8NP (GB); Langridge, James Ian, Sale, Cheshire M33 5BZ (GB); Hoyes, John Brian, Stockport, Cheshire SK4 4JU (GB); Wildgoose, Jason Lee, Stockport, Cheshire SK4 3PJ (GB)
(74) Representative: Jeffrey, Philip Michael

(56) References cited:
- EP-A- 1 102 986
- WO-A-00/70335
- WO-A-01/35441
- WO-A-01/69221
- WO-A-02/07185
- WO-A-98/56029
- US-A- 6 020 586
- US-A- 6 124 592
- HENDERSON ET AL: "ESI/ion trap/ion mobility/time-of-flight mass spectrometry for rapid and sensitive analysis of biomolecular mixtures" ANALYTICAL CHEMISTRY, vol. 71, no. 2, 15 January 1999 (1999-01-15), pages 291-301, XP000917830

## Description

With the decoding of the 20-30,000 genes that compose the human genome, emphasis has switched to the identification of the translated gene products that comprise the proteome. Mass spectrometry has firmly established itself as the primary technique for identifying proteins due to its unparalleled speed, sensitivity and specificity. Strategies can involve either analysis of the intact protein, or more commonly digestion of the protein using a specific protease that cleaves at predictable residues along the peptide backbone. This provides smaller stretches of peptide sequence that are more amenable to analysis via mass spectrometry.

The mass spectrometry technique providing the highest degree of specificity and sensitivity is Electrospray ionisation ("ESI") interfaced to a tandem mass spectrometer. These experiments involve separation of the complex digest mixture by microcapillary liquid chromatography with on-line mass spectral detection using automated acquisition modes whereby conventional MS and MS/MS spectra are collected in a data dependant manner. This information can be used directly to search databases for matching sequences leading to identification of the parent protein. This approach can be used to identify proteins that are present at low endogenous concentrations.

WO 00/70335 discloses a mass spectrometer instrument comprising an ion mobility spectrometer and a time-of-flight mass spectrometer. In one arrangement a collision cell is used to conduct sequencing analysis of a sample of biological molecules.

Following an initial experimental run with the collision cell deactivated, any ions having overlapping mobility values are identified in the drift time vs. time of flight spectrum. In subsequent experimental runs with the collision cell activated, a quadrupole mass filter can be used to selectively filter out one of the previously identified overlapping ions.

It is discussed in "ESI/Ion Trap/Ion Mobility/Time-of-Flight Mass Spectrometry for Rapid and Sensitive Analysis of Biomolecular Mixtures" by Clemmer et al., Anal. Chem. 1999, 71, 291-301, how ion mobility data can be combined with mass-to-charge ratio measurements to resolve overlapping ions. This allows peaks in a mass spectrum to be assigned for a sample of a known composition.

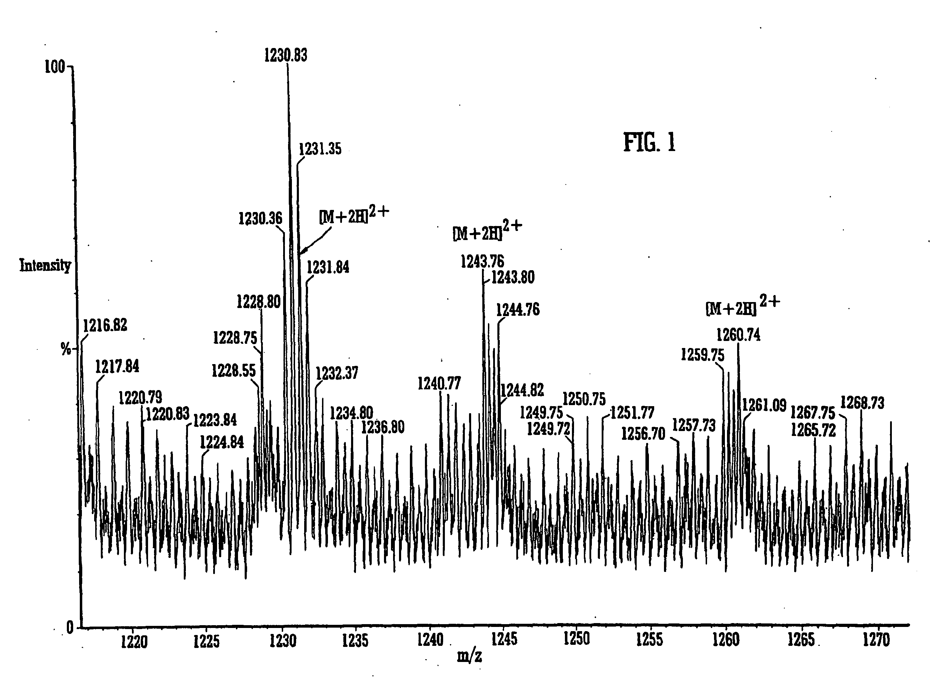

However, often the limiting factor for identification of the protein is not the quality of the MS/MS spectrum produced but is the initial discovery of the multiply charged peptide precursor ion in the MS mode. This is due to the level of background chemical noise, largely singly charged in nature, which may be produced in the ion source of the mass spectrometer. Fig. 1 shows a typical conventional mass spectrum and illustrates how doubly charged species may be obscured amongst a singly charged background. A method whereby the chemical noise is reduced so that the mass spectrometer can more easily target peptide related ions would be highly advantageous for the study of protein digests.

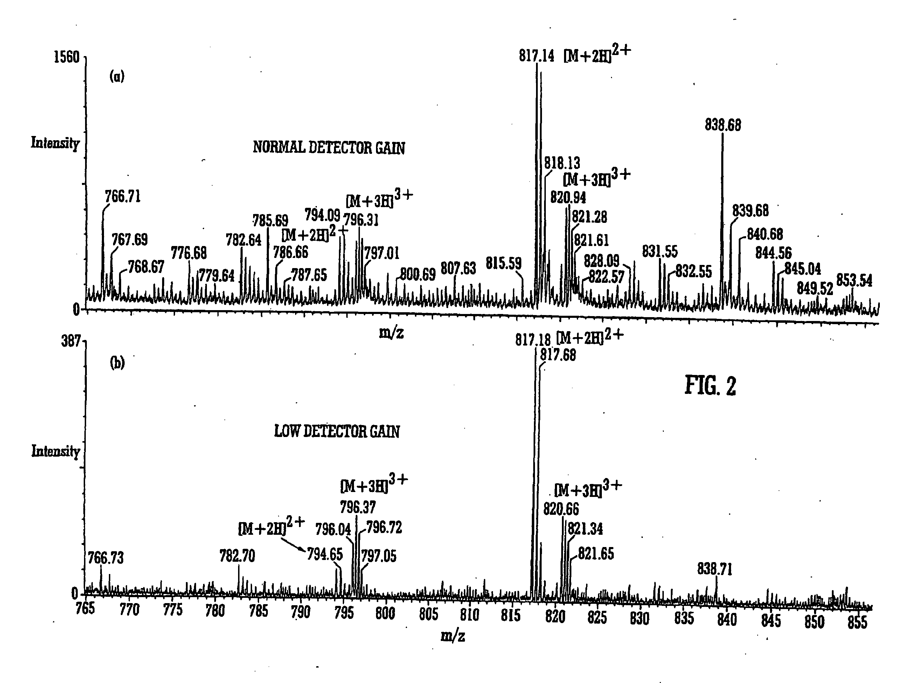

A known method used to favour the detection of multiply charged species over singly charged species is to use an Electrospray ionisation orthogonal acceleration time of flight mass analyser ("ESI-oaTOF"). The orthogonal acceleration time of flight mass analyser counts the arrival of ions using a Time to Digital Converter ("TDC") which has a discriminator threshold. The voltage pulse of a single ion must be high enough to trigger the discriminator and so register the arrival of an ion. The detector producing the voltage may be an electron multiplier or a Microchannel Plate detector ("MCP"). These detectors are charge sensitive so the size of signal they produce increases with increasing charge state. Discrimination in favour of higher charge states can be accomplished by increasing the discriminator voltage level, lowering the detector gain, or a combination of both. Fig. 2(a) shows a mass spectrum obtained with normal detector gain and Fig. 2(b) shows a comparable mass spectrum obtained with a reduced detector gain. An important disadvantage of lowering the detector gain (or of increasing the discriminator level) is that the sensitivity is lowered. As can be seen from the ordinate axes of Figs. 2(a) and (b), the sensitivity is reduced by a factor of ∼x4 when a lower detector gain is employed. Using this method it is also impossible to pick out an individual charge state. Instead, the best that can be achieved is a reduction of the efficiency of detection of lower charge states with respect to higher charge states.

Another ionisation technique that has been recently coupled to tandem mass spectrometers for biological mass spectrometry is Matrix Assisted Laser Desorption Ionisation ("MALDI"). When a MALDI ion source is used high levels of singly charged matrix related ions and chemical noise are generated which make it difficult to identify candidate peptide ions.

It is therefore desired to provide an improved mass spectrometer and method of mass spectrometry which does not suffer from some or all of the disadvantages of the prior art.

According to a first aspect of present invention there is provided a method of mass spectrometry as defined by claim 1..

The preferred embodiment is particularly advantageous in that it allow ions with a multiple charge state to be selected from a mixture of ions having differing charge states. Another advantage is that sensitivity for this technique is greater than the known discriminator level technique as the detector can be run at full gain and all ions present may be counted.

According to the invention, multiply charged ions (which may include doubly, triply and quadruply charged ions and ions having five or more charges) are preferentially selected and transmitted whilst the intensity of singly charged ions is reduced. For example, two or more multiply charged states may be transmitted.

The first device preferably comprises an ion mobility spectrometer or other ion mobility device. Ions in an ion mobility spectrometer may be subjected to an electric field in the presence of a buffer gas so that different species of ion acquire different velocities and are temporally separated according to their ion mobility. The mobility of an ion in an ion mobility spectrometer typically depends *inter alia* upon its mass and its charge. Heavy ions with one charge tend to have lower mobilities than light ions with one charge. Also an ion of a particular mass to charge ratio with one charge tends to have a lower mobility than an ion with the same mass to charge ratio but carrying two (or more) charges.

The ion mobility spectrometer may be similar to a known ion mobility spectrometer comprising a drift tube together with one or more electrodes for maintaining an axial DC voltage gradient along at least a portion of the drift tube.

Alternatively, the ion mobility spectrometer may comprise a Field Asymmetric Ion Mobility Spectrometer ("FAIMS"). In one embodiment a FAIMS may comprise two axially aligned inner cylinders surrounded by a long outer cylinder. The outer cylinder and a shorter inner cylinder are preferably held at the same electrical potential. A longer inner cylinder may have a high frequency high voltage asymmetric waveform applied to it, thereby establishing an electric field between the inner and outer cylinders. A compensation DC voltage is also applied to the longer inner cylinder. A FAIMS acts like a mobility filter and may operate at atmospheric pressure.

However, according to a particularly preferred embodiment, a new form of ion mobility spectrometer is contemplated comprising a plurality of electrodes having apertures wherein a DC voltage gradient is maintained across at least a portion of the ion mobility spectrometer and at least some of the electrodes are connected to an AC or RF voltage supply. The new form of ion mobility spectrometer is particularly advantageous in that the addition of an AC or RF voltage to the electrodes (which may be ring like or otherwise annular) results in radial confinement of the ions passing through the ion mobility spectrometer. Radial confinement of the ions results in higher ion transmission compared with conventional ion mobility spectrometers of the drift tube type.

The quadrupole mass filter is operated as a high pass mass to charge ratio filter so as to transmit substantially only ions having a mass to charge ratio greater than a minimum value. In this embodiment multiply charged ions are preferentially transmitted compared to singly charged ions (i.e. doubly, triply, quadruply and ions having five or more charges may be transmitted whilst singly charged ions are attenuated).

The quadrupole mass filter is scanned so that the minimum mass to charge ratio cut-off is progressively increased during a cycle (which is defined as the period between consecutive pulses of ions being admitted into the ion mobility spectrometer). The quadrupole mass filter is scanned in a substantially continuous (i.e. smooth) manner.

A particularly preferred feature is to provide an ion trap upstream of the drift region. This ion trap is separate to an ion trap which may be provided preferably upstream of the ion mobility spectrometer. The ion trap may preferably store and periodically release ions so that a pulsed (rather than a continuous) source of ions is admitted or otherwise inputted in to the drift region. The injection electrode is arranged to inject ions a predetermined period of time after ions have first been released from the ion trap upstream of the drift region. The period of time is set so that only ions having a desired mass to charge ratio or a mass to charge ratio within a desired range are substantially injected by the injection electrode in an orthogonal direction and are hence onwardly transmitted.

In a preferred embodiment a single packet of ions is released from the ion trap and then the predetermined time delay is slightly increased. The process of increasing the time delay may be repeated a number of times (e.g. 40-50 times) during one cycle of ions being input into the ion mobility spectrometer.

According to another embodiment, a number of packets of ions (e.g. 4-5 packets) may be repeatedly released from the ion trap before the predetermined time delay is progressively increased. As with the other embodiment, the process of increasing the time delay may be repeated a number of times during one cycle.

At the upstream end of the mass spectrometer, the ion source may be a pulsed ion source such as a Matrix Assisted Laser Desorption Ionisation ("MALDI") ion source. The pulsed ion source may alternatively comprise a Laser Desorption Ionisation ion source which is not matrix assisted.

Alternatively, and more preferably, a continuous ion source may be used in which case an ion trap for storing ions and periodically releasing ions is also preferably provided. Continuous ion sources which may be used include Electrospray, Atmospheric Pressure Chemical Ionisation ("APCI"), Electron Impact ("EI"), Atmospheric Pressure Photon Ionisation ("APPI") and Chemical Ionisation ("CI") ion sources. Other continuous or pseudo-continuous ion sources may also be used. In an embodiment the mass spectrometer may be a Fourier Transform mass spectrometer or a Fourier Transform Ion Cyclotron Resonance mass spectrometer.

A collision cell may be provided in both the main preferred embodiments. In one mode of operation at least some ions entering the collision cell are caused to fragment.

An orthogonal acceleration time of flight mass analyser is particularly preferred, although another type of mass analyser such as a quadrupole mass analyser or a 3D ion trap are also contemplated.

According to a second aspect of the present invention, there is provided a mass spectrometer 7 as defined by claim 13.

The first device preferably comprises an ion mobility spectrometer comprising: a plurality of electrodes having apertures wherein a DC voltage gradient is maintained across at least a portion of the ion mobility spectrometer and at least some of the electrodes are connected to an AC or RF voltage supply.

The ion mobility spectrometer preferably extends between two vacuum chambers so that an upstream section comprising a first plurality of electrodes having apertures is arranged in a vacuum chamber and a downstream section comprising a second plurality of electrodes having apertures is arranged in a further vacuum chamber, the vacuum chambers being separated by a differential pumping aperture.

At least some of the electrodes in the upstream section are preferably supplied with an AC or RF voltage having a frequency within the range 0.1-3.0 MHz. A frequency of 0.5-1.1 MHz is preferred and a frequency of 780 kHz is particularly preferred. The upstream section is preferably arranged to be maintained at a pressure within the range 0.1-10 mbar, preferably approximately 1 mbar.

At least some of the electrodes in the downstream section are preferably supplied with an AC or RF voltage having a frequency within the range 0.1-3.0 MHz. A frequency of 1.8-2.4 MHz is preferred and a frequency of 2.1 MHz is particularly preferred. The downstream section is preferably arranged to be maintained at a pressure within the range 10⁻³-10⁻² mbar.

The voltages applied to the electrodes in the upstream section may be such that a first DC voltage gradient is maintained in use across at least a portion of the upstream section and a second different DC voltage gradient may be maintained in use across at least a portion of the downstream section, the first DC voltage gradient being preferably greater than the second DC voltage gradient. Either voltage gradient does not necessarily have to be linear and indeed a stepped voltage gradient is particularly preferred.

Preferably, the ion mobility spectrometer comprises at least 10, 20, 30, 40, 50, 60, 70, 80, 90 or 100 electrodes. Preferably, at least 60%, 65%, 70%, 75%, 80%, 85%, 90%, 95% of the electrodes forming the ion mobility spectrometer have apertures which are of substantially the same size or area.

Various embodiments of the present invention will now be described, by way of example only, and with reference to the accompanying drawings in which:
Fig. 1 shows a conventional mass spectrum;
Fig. 2(a) shows a conventional mass spectrum obtained with normal detector gain, and Fig. 2(b) shows a comparable conventional mass spectrum obtained by lowering the detector gain;
Fig. 3(a) shows the known relationship between flight time in a time of flight mass analyser drift region versus drift time in an ion mobility spectrometer for various singly and doubly charged ions, and Fig. 3(b) shows an experimentally determined relationship between the mass to charge ratio of a sample of ions and their drift time through an ion mobility spectrometer;
Fig. 4 illustrates the general principle of filtering out singly charged ions according to a preferred embodiment of the present invention;
Fig. 5 shows a preferred embodiment of the present invention;
Fig. 6(a) illustrates a preferred embodiment of an ion trap, ion gate and ion mobility spectrometer, Fig. 6(b) illustrates the various DC voltages which may be applied to the ion trap, ion gate and ion mobility spectrometer, Fig. 6(c) illustrates how the DC voltage applied to the ion gate may vary as a function of time, and Fig. 6(d) illustrates how a quadrupole mass filter may be scanned according to a preferred embodiment;
Fig. 7(a) shows a conventional mass spectrum and Fig. 7(b) shows a comparable mass spectrum obtained according to a preferred embodiment of the present invention; and
Fig. 8(a) shows another conventional mass spectrum and Fig. 8(b) shows a comparable mass spectrum obtained according to a preferred embodiment of the present invention.

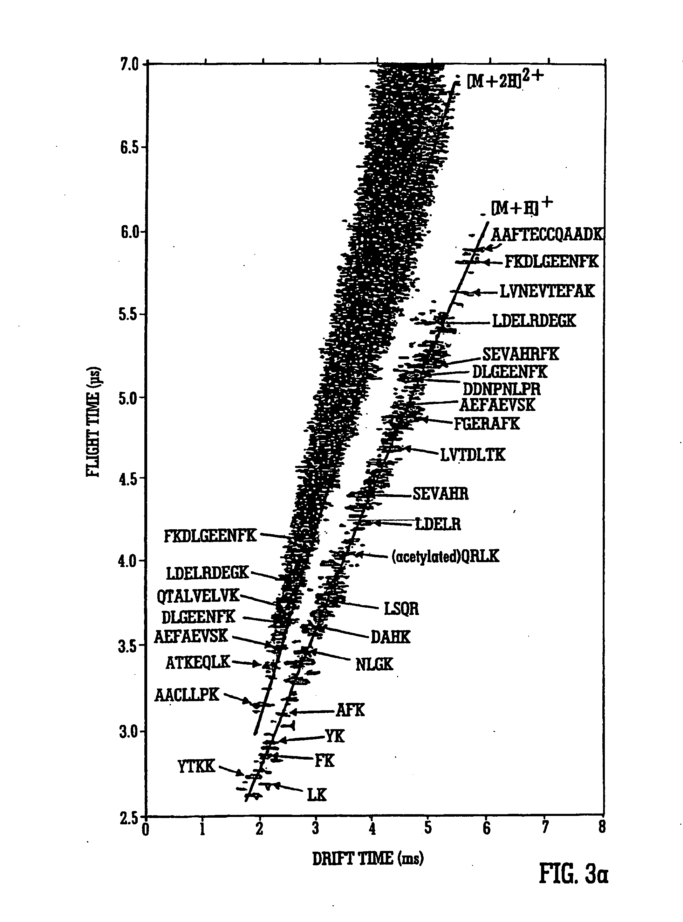

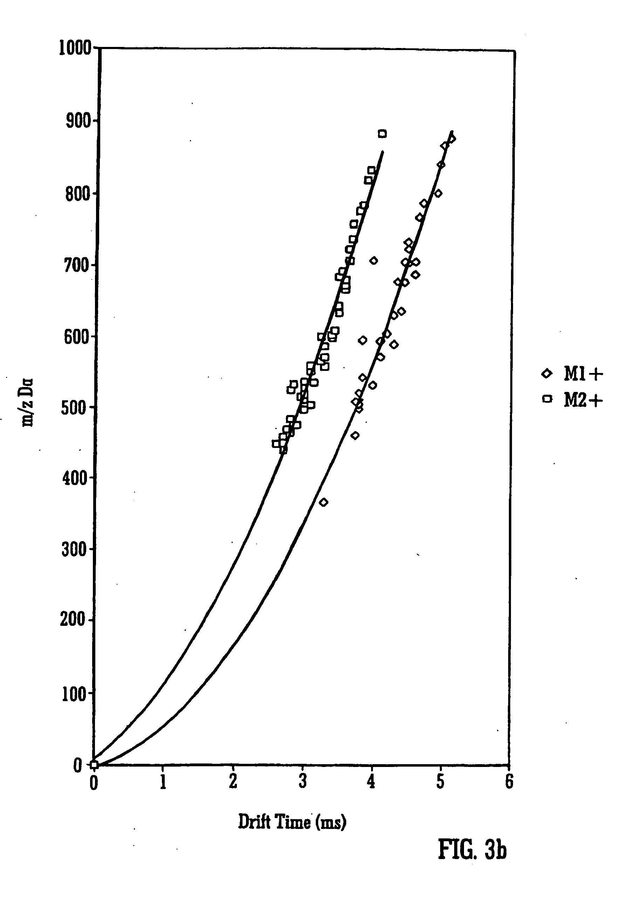

Various embodiments of the present invention will now be described. Fig. 3(a) shows the known relationship of flight time in a drift region of a time of flight mass analyser versus drift time in an ion mobility spectrometer for various singly and doubly charged ions. An experimentally determined relationship between the mass to charge ratio of ions and their drift time through an ion mobility spectrometer is shown in Fig. 3(b). This relationship can be represented by an empirically derived polynomial expression. As can be seen from these figures, a doubly charged ion having the same mass to charge ratio as a singly charged ion will take less time to drift through an ion mobility spectrometer compared with a singly charged ion. Although the ordinate axis of Fig. 3(a) is given as the flight time through the drift region of a time of flight mass analyser, it will be appreciated that this correlates directly with the mass to charge ratio of the ion.

The present inventors have recognised that if a mass filter is provided in combination with an ion mobility spectrometer, and if the mass filter is scanned (i.e. the transmitted range of mass to charge ratios is varied) in synchronisation with the drift of ions through the ion mobility spectrometer, then it is possible to arrange that only ions having a particular charge state (e.g. multiply charged ions) will be transmitted onwardly e.g. to a mass analyser. The ability to be able to substantially filter out singly charged background ions and/or to select ions of one or more specific charge states for analysis represents a significant advance in the art.

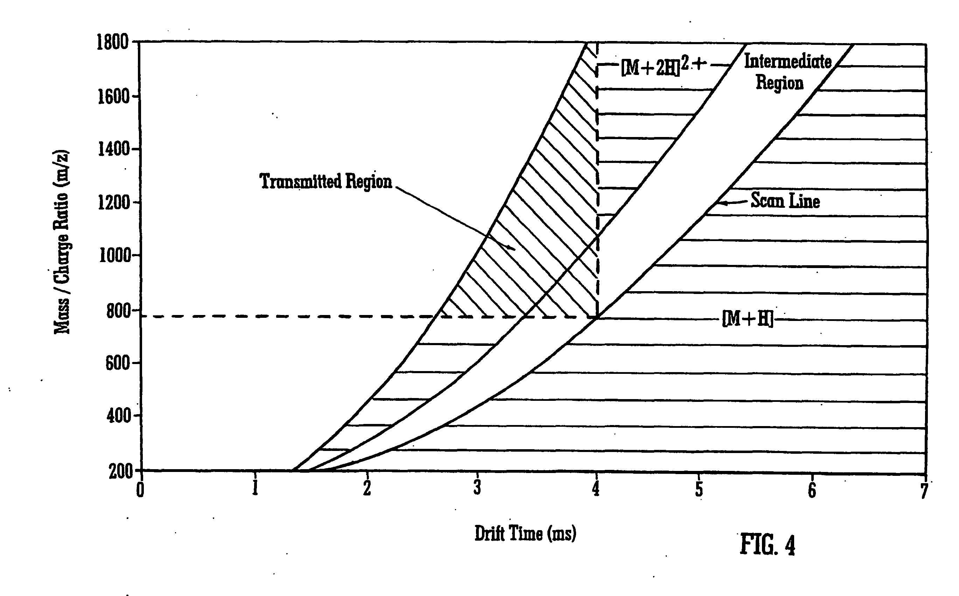

Fig. 4 illustrates an embodiment of the present invention. The known data of Fig. 3(a) and the experimentally derived data of Fig. 3(b) can be interpreted such that all ions having the same charge state can be considered to fall within a distinct region or band of a 2D plot of mass to charge ratio versus drift time through an ion mobility spectrometer. In Fig. 4 singly and doubly charged ions are shown as falling within distinct bands with an intermediate region therebetween where very few ions of interest are to be found. Triply and quadruply charged ions etc. are not shown for ease of illustration only. The large area below the "scan line" can be considered to represent singly charged ions and the other area can be considered to represent doubly charged ions.

According to a preferred embodiment, a mass filter is provided which is synchronised with the operation of an ion mobility spectrometer. Considering Fig. 4, it can be seen that at a time around 4 ms after ions have first entered or been admitted to the drift region of the ion mobility spectrometer, ions may be emerging from the ion mobility spectrometer with various different mass to charge ratios. Those ions which emerge with a mass to charge ratio of approximately 1-790 are most likely to be singly charged ions whereas those ions emerging with a mass to charge ratio of approximately 1070-1800 are most likely to be doubly charged ions. Very few, if any, ions will emerge at that point of time with a mass to charge ratio between 790-1070 (which corresponds with the intermediate region of the graph). Therefore, if the mass filter is set at this particular point in time so as to transmit only ions having a mass to charge ratio > 790 then it can be assumed that the majority of the singly charged ions will not be onwardly transmitted whereas doubly charged ions (and ions having a higher charge state) will be substantially onwardly transmitted. If the mass filter is operated as a high pass mass filter and if the minimum cut-off mass to charge ratio of the mass filter follows in real time the "scan line" shown in Fig. 4 (i.e. if it tracks the upper predetermined mass to charge ratio for singly charged ions as a function of time) then it will be appreciated that only multiply charged ions will substantially be onwardly transmitted.

According to other embodiments the mass filter may track the lower predetermined mass to charge ratio for doubly charged ions. The cut-off mass to charge ratio may also lie for at least a portion of a cycle within the intermediate region which separates the regions comprising singly and doubly charged ions. The minimum cut-off mass to charge ratio of the mass filter may also vary in a predetermined or random manner between the upper threshold of the singly charged ion region, the intermediate region and the lower threshold of the doubly charged ion region. It will also be appreciated that according to less preferred embodiments, the minimum cut-off mass to charge ratio may fall for at least a portion of time within the region considered to comprise either singly or doubly charged ions. In such circumstances, ions of a potentially unwanted charge state may still be transmitted, but the intensity of such ions will nonetheless be reduced.

The minimum cut-off mass to charge ratio is varied smoothly, and is preferably increased with time. .

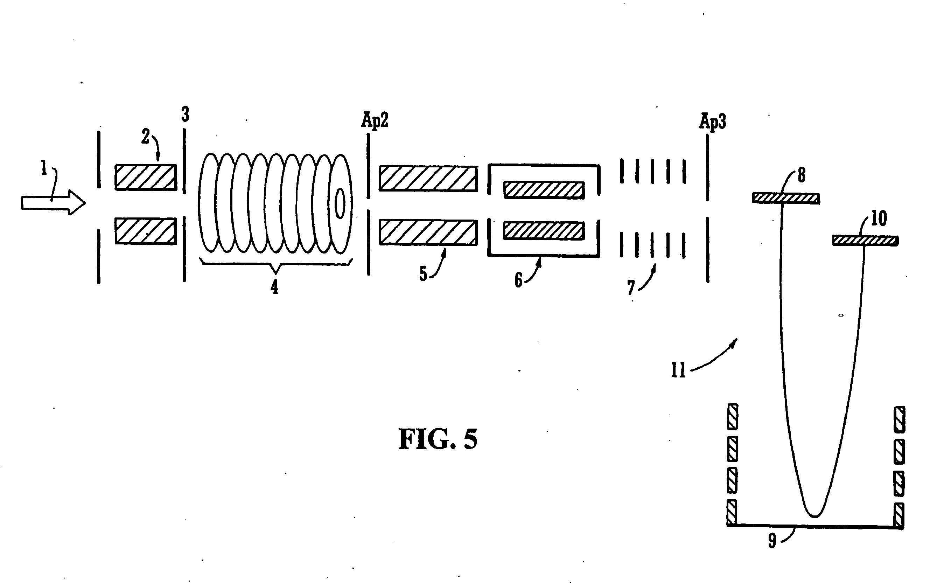

Fig. 5 shows a main preferred embodiment of the present invention. An ion mobility spectrometer 4 is provided. A pulse of ions is admitted to the ion mobility spectrometer 4. A continuous ion source, e.g. Electrospray ion source, preferably generates a beam of ions 1 which are trapped in an ion trap 2 upstream of the ion mobility spectrometer 4 and are then pulsed out of the ion trap 2 by the application of an extraction voltage to an ion gate 3 at the exit of the ion trap 2.

The ion trap 2 may comprise a quadrupole rod set having a length of approximately 75 mm. However, according to a more preferred embodiment the ion trap may comprise an ion tunnel comprising a plurality of electrodes having apertures therein. The apertures are preferably all the same size. In other embodiments at least 60%, 65%, 70%, 75%, 80%, 85%, 90% or 95% of the electrodes have apertures which are substantially the same size. The ion tunnel may preferably comprise approximately 50 electrodes. Adjacent electrodes are preferably connected to opposite phases of an AC or RF voltage supply so that ions are radially confined in use within the ion tunnel.

The voltage applied to the ion gate 3 may be dropped for a short period of time thereby causing ions to be ejected from the ion trap 2 in a substantially pulsed manner into the ion mobility spectrometer 4.

In less preferred embodiments, a pulsed ion source such as a Matrix Assisted Laser Desorption Ionisation ("MALDI") ion source or a Laser Desorption Ionisation ion source may be used instead of a continuous ion source. If a pulsed ion source is used, then ion trap 2 and ion gate 3 may be omitted.

The ion mobility spectrometer 4 is a device which causes ions to become temporally separated based upon their ion mobility. A number of different forms of ion mobility spectrometer may be used.

In one embodiment, the ion mobility spectrometer 4 may comprise a conventional ion mobility spectrometer consisting of a drift tube having a number of guard rings distributed within the drift tube. The guard rings may be interconnected by equivalent valued resistors and connected to a DC voltage source. A linear DC voltage gradient is generated along the length of the drift tube. The guard rings are not connected to an AC or RF voltage source.

In another embodiment, the ion mobility spectrometer 4 may comprise a Field Asymmetric Ion Mobility Spectrometer ("FAIMS").

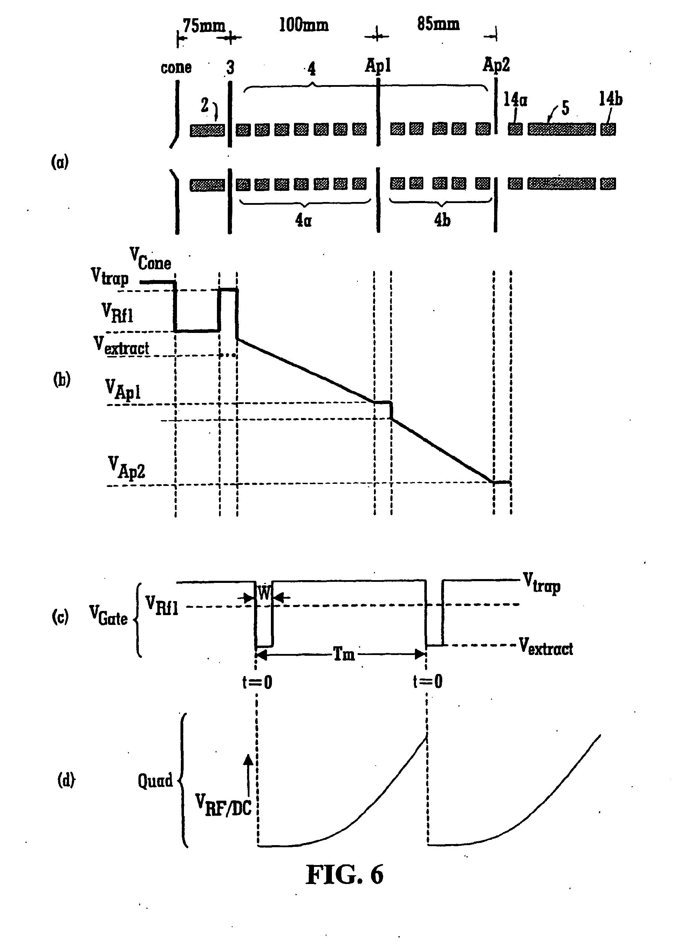

According to a particularly preferred embodiment, a new form of ion mobility spectrometer 4 is preferably provided. According to this embodiment the ion mobility spectrometer 4 comprises a number of ring/annular or plate electrodes, or more generally electrodes having an aperture therein through which ions are transmitted. The apertures are preferably all the same size and are preferably circular. In other embodiments at least 60%, 65%, 70%, 75%, 80%, 85%, 90% or 95% of the electrodes have apertures which are substantially the same size or area. A schematic example of the new form of ion mobility spectrometer 4 is shown in Fig. 6(a). The ion mobility spectrometer 4 may comprise a plurality of electrodes 4a,4b which are either arranged in a single vacuum chamber, or, as shown in Fig. 6(a), are arranged in two adjacent vacuum chambers separated by a differential pumping aperture Ap1. In one embodiment, the portion of the ion mobility spectrometer 4a in an upstream vacuum chamber may have a length of approximately 100 mm, and the portion of the ion mobility spectrometer 4b in a downstream vacuum chamber may have a length of approximately 85 mm. The ion trap 2, ion gate 3 and upstream portion 4a of the ion mobility spectrometer 4 are all preferably provided in the same vacuum chamber which is preferably maintained, in use, at a pressure within the range 0.1-10 mbar. According to less preferred embodiments, the vacuum chamber housing the upstream portion 4a may be maintained at a pressure greater than 10 mbar up to a pressure at or near atmospheric pressure. Also, according to less preferred embodiments, the vacuum chamber may alternatively be maintained at a pressure below 0.1 mbar.

In the preferred embodiment the electrodes comprising the ion trap 2 are maintained at a DC voltage V_{rf1}. Ion gate 3 is normally held at a higher DC voltage Vₜᵣₐₚ than V_{rf1}, but the voltage applied to the ion gate 3 is periodically dropped to a voltage V_{extract} which is preferably lower than V_{rf1} thereby causing ions to be accelerated out of the ion trap 2 and to be admitted into the ion mobility spectrometer 4.

Adjacent electrodes which form part of the ion trap 2 are preferably connected to opposite phases of a first AC or RF voltage supply. The first AC or RF voltage supply preferably has a frequency within the range 0.1-3.0 MHz, preferably 0.5-1.1 MHz, further preferably 780 kHz.

Alternate electrodes forming the upstream section 4a of the ion mobility spectrometer 4 are preferably capacitively coupled to opposite phases of the first AC or RF voltage supply.

The electrodes comprising the ion trap 2, the electrodes comprising the upstream portion 4a of the ion mobility spectrometer 4 and the differential pumping aperture Ap1 separating the upstream portion 4a from the downstream portion 4b of the ion mobility spectrometer 4 are preferably interconnected via resistors to a DC voltage supply which in one embodiment comprises a 400 V supply. The resistors interconnecting electrodes forming the upstream portion 4a of the ion mobility spectrometer 4 may be substantially equal in value in which case an axial DC voltage gradient is obtained as shown in Fig. 6(b). The DC voltage gradient is shown for ease of illustration as being linear, but may preferably be stepped. The applied AC or RF voltage is superimposed upon the DC voltage and serves to radially confine ions within the ion mobility spectrometer 4. The DC voltage Vₜᵣₐₚ or V_{extract} applied to the ion gate 3 preferably floats on the DC voltage supply. The first AC or RF voltage supply is preferably isolated from the DC voltage supply by a capacitor.

In a similar manner, alternate electrodes forming the downstream portion 4b of the ion mobility spectrometer 4 are preferably capacitively coupled to opposite phases of a second AC or RF voltage supply. The second AC or RF voltage supply preferably has a frequency in the range 0.1-3.0 MHz, preferably 1.8-2.4 MHz, further preferably 2.1 MHz. In a similar manner to the upstream portion 4a, a substantially linear or stepped axial DC voltage gradient is maintained along the length of the downstream portion 4b of the ion mobility spectrometer 4. As with the upstream portion 4a, the applied AC or RF voltage is superimposed upon the DC voltage and serves to radially confine ions within the ion mobility spectrometer 4. The DC voltage gradient maintained across the upstream portion 4a is preferably not the same as the DC voltage gradient maintained across the downstream portion 4b. According to a preferred embodiment, the DC voltage gradient maintained across the upstream portion 4a is greater than the DC voltage gradient maintained across the downstream portion 4b.

The pressure in the vacuum chamber housing the downstream portion 4b is preferably in the range 10⁻³ to 10⁻² mbar. According to less preferred embodiments, the pressure may be above 10⁻² mbar, and could be similar in pressure to the pressure of the vacuum chamber housing the upstream portion 4a. It is believed that the greatest temporal separation of ions occurs in the upstream portion 4a due to the higher background gas pressure. If the pressure is too low then the ions will not make enough collisions with gas molecules for a noticeable temporal separation of the ions to occur.

The size of the orifice in the ion gate 3 is preferably of a similar size or is substantially the same internal diameter or size as the differential pumping aperture Ap1. Downstream of the ion mobility spectrometer 4 another differential pumping aperture Ap2 may be provided leading to a vacuum chamber housing a quadrupole mass filter 5. Pre- and post-filters 14a,14b may be provided. The apertures of the electrodes forming the ion mobility spectrometer 4 are preferably all the same size. In other embodiments at least 60%, 65%, 70%, 75%, 80%, 85%, 90% or 95% of the electrodes have apertures which are substantially the same size.

In another preferred embodiment of the present invention the ion mobility spectrometer 4 may comprise an ion tunnel comprised of a plurality of segments. In one embodiment 15 segments may be provided. Each segment may comprise two electrodes having apertures interleaved with another two electrodes having apertures. All four electrodes in a segment are preferably maintained at the same DC voltage but adjacent electrodes are connected to opposite phases of the AC or RF supply. The DC and AC/RF voltage supplies are isolated from one another. Preferably, at least 90% of all the electrodes forming the ion tunnel comprised of multiple segments have apertures which are substantially similar or the same in size.

Typical drift times through the ion mobility spectrometer 4 are of the order of a few ms. After all the generated ions have traversed the ion mobility spectrometer 4 a new pulse of ions may be admitted which marks the start of a new cycle of operation. Many cycles may be performed in a single experimental run.

An important feature of the invention is the provision of a quadrupole rod set mass filter which is varied in a specified manner in conjunction with the operation of the ion mobility spectrometer 4. .

If the mass filter 5 is synchronised to the start of the pulse of ions being admitted into the ion mobility spectrometer 4, then the mass filter 5 can be set to transmit (in conjunction with the operation of the ion mobility spectrometer 5) only those ions having a mass to charge ratio that corresponds at any particular point in time with the charge state of the ions of interest. Preferably, the mass filter should be able to sweep the chosen mass to charge ratio range on at least the time scale of ions drifting through the drift region. In other words, the mass filter should be able to be scanned across the desired mass to charge ratio range in a few milliseconds. Quadrupole mass filters 5 are capable of operating at this speed.

According to the main preferred embodiment, either the AC (or RF) voltage and/or the DC voltage applied to the quadrupole mass filter 5 may be swept in synchronisation with the pulsing of ions into the ion mobility spectrometer 4. As discussed above in relation to Fig. 4, the quadrupole mass filter 5 is operated in a high pass mode when multiply charged ions are preferred. The varying of a mass filtering characteristic of the quadrupole mass filter 5 is such that ions having a multiple charge state (or states) are preferably onwardly transmitted, preferably to the at least near exclusion of single charge states, for at least part of the cycle time Tm between pulses of ions being injected into the ion mobility spectrometer 4. Figs. 6(c) and (d) show the inter-relationship between ions being pulsed out of the ion trap 2 into the ion mobility spectrometer 4, and the scanning of the mass filter 5. Synchronisation of the operation of the mass filter 5 with the drift times of desired ions species through the ion mobility spectrometer 4 enables a duty cycle of ∼100% to be obtained for ions having the charge state(s) of interest.

Referring back to Fig. 5, a collision (or gas) cell 6 may be provided preferably downstream of the ion mobility spectrometer 4 and preferably downstream of the quadrupole mass filter 5. Ions may be arranged so that they are sufficiently energetic when they enter the collision cell 6 so that they collide with gas molecules present in the gas cell 6 and fragment into daughter ions. Subsequent mass analysis of the daughter ions yields valuable mass spectral information about the parent ion(s). Ions may also be arranged so that they enter the gas or collision cell 6 with much less energy, in which case they may not substantially fragment. The energy of ions entering the collision cell 6 can be controlled e.g. by setting the level of a voltage gradient experienced by the ions prior to entering the collision cell 6. Since the voltage gradient can be switched near instantaneously, the collision cell 6 can, in effect, be considered to be switchable between a relatively high fragmentation mode and a relatively low fragmentation mode.

Ion optical lenses 7 are preferably provided downstream of the collision cell 6 to guide ions through a further differential pumping aperture Ap3 and into an analyser chamber containing a mass analyser. According to a particularly preferred embodiment, the mass analyser comprises an orthogonal acceleration time of flight mass analyser 11 having a pusher and/or puller electrode 8 for injecting ions into an orthogonal drift region. A reflectron 9 is preferably provided for reflecting ions travelling through the orthogonal drift region back towards a detector 10. As is well known in the art, at least some of the ions in a packet of ions entering an orthogonal acceleration time of flight mass analyser will be orthogonally accelerated into the orthogonal drift region. Ions will become temporally separated in the orthogonal drift region in a manner dependent upon their mass to charge ratio. Ions having a lower mass to charge ratio will travel faster in the drift region and will reach the detector 10 prior to ions having a higher mass to charge ratio. The time it takes an ion to drift through the drift region and to reach the detector 10 can be used to accurately determine the mass to charge ratio of the ion in question. The intensity of ions and their mass to charge ratios can be used to produce a mass spectrum.

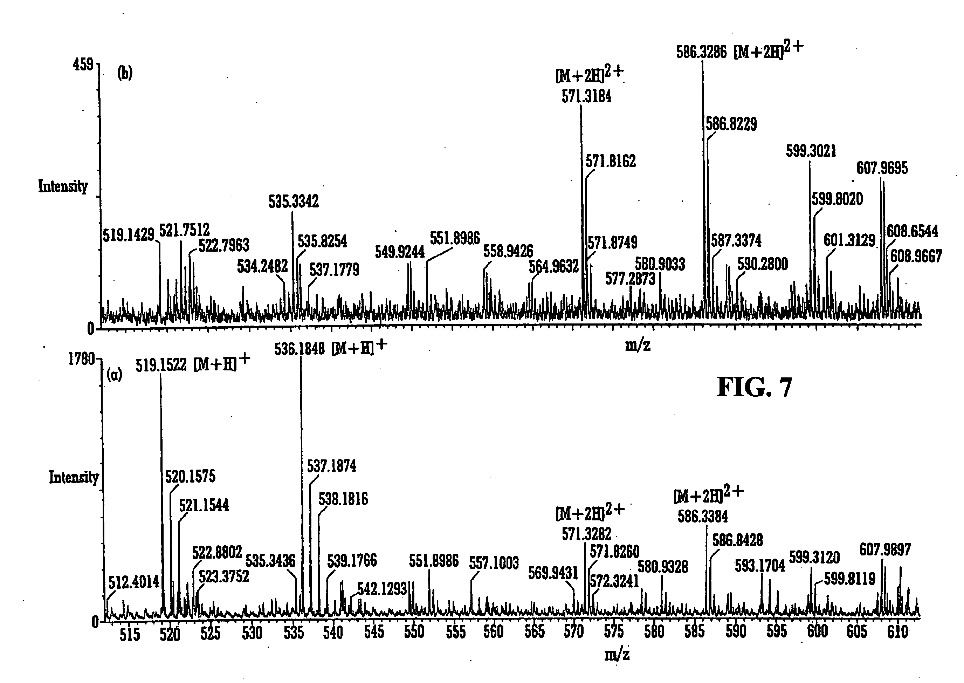

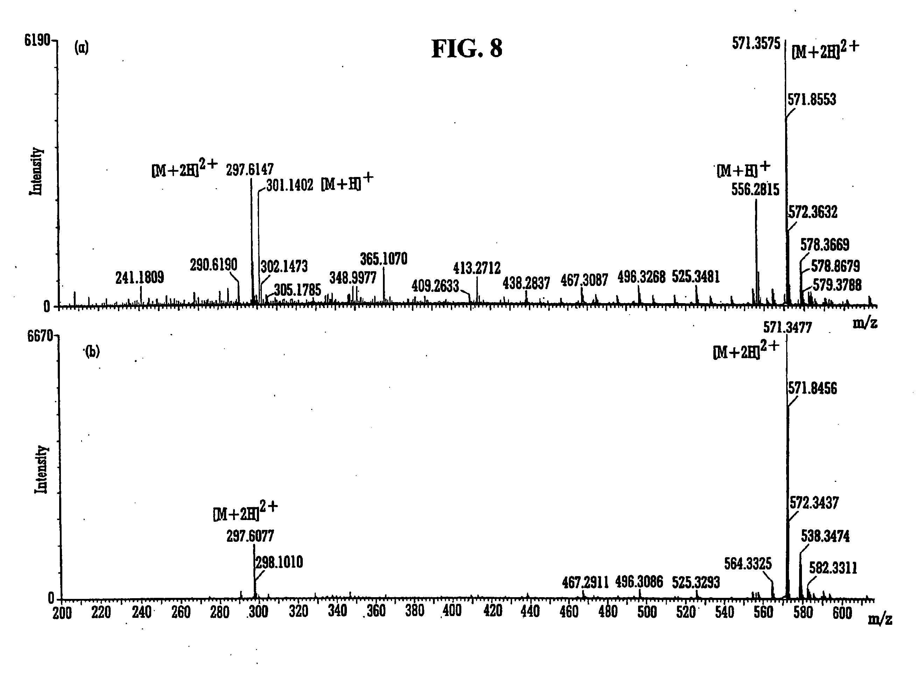

Some experimental results are shown in Figs. 7(a) and (b). Fig. 7(a) shows a conventional mass spectrum i.e. without any charge state selection being performed. Fig. 7(b) shows a comparable mass spectrum obtained with charge state selection according to the preferred embodiment. As can be seen, singly charged ions are substantially absent from the mass spectrum. Similarly, Fig. 8(a) shows another conventional mass spectrum and Fig. 8(b) shows a comparable mass spectrum obtained with charge state selection according to the preferred embodiment. Again, it can be seen that singly charged ions are substantially absent from the mass spectrum.

Other embodiments are contemplated wherein the AC or RF voltage supplied to electrode(s) in an ion tunnel (either an ion mobility spectrometer and/or ion trap) may be non-sinusoidal and may, for example, take the form of a square wave.

Yet further embodiments are contemplated wherein other types of mass filter are used in addition to a quadrupole mass filter . In particular, embodiments are contemplated wherein a RF hexapole, octapole or other multipole rod set mass filter is used. Alternatively, a RF ring set or a RF ion trap (either 2D or 3D) may be used.

According to a preferred embodiment both the upstream ion trap 2 and the ion mobility spectrometer 4 may comprise an ion tunnel i.e. a plurality of electrodes wherein each electrode has an aperture therein through which ions are transmitted. The electrodes, preferably having substantially similar sized apertures, forming each ion tunnel may comprise essentially a square or rectangular plate or a ring. In either case the apertures are preferably circular. According to various embodiments, the ion tunnel ion trap and/or ion mobility spectrometer may comprise at least 10, 20, 30, 40, 50, 60, 70, 80, 90 or 100 electrodes of which at least 60%, 65%, 70%, 75%, 80%, 85%, 90% or 95% have apertures which are substantially the same size or area. As will be appreciated, the construction of an ion tunnel which preferably comprises a large number of plate like electrodes is quite distinct from a multipole rod set ion guide.

Embodiments of the invention are also contemplated wherein the DC voltage profile along the length of the ion mobility spectrometer and/or ion trap and/or collision cell is not strictly linear, but rather has a stepped profile.

Although the present invention has been described with reference to preferred embodiments, it will be understood by those skilled in the art that various changes in form and detail may be made without departing from the scope of the invention as set forth in the accompanying claims.

## Claims

1. A method of mass spectrometry comprising:
providing a pulse of ions and performing the following steps before providing another pulse of ions:
(a) temporally separating at least some of said ions according to their ion mobility in a first device (4);
(b) mass filtering at least some of said ions according to their mass to charge ratio in a second device comprising a quadrupole rod set mass filter (5);
**characterised in that** said method further comprises:
(c) operating said quadrupole mass filter as a high pass mass to charge ratio filter so as to substantially only transmit ions having a mass to charge ratio greater than a minimum value; and
(d) progressively varying a mass filtering characteristic of said second device (5) by scanning said quadrupole mass filter in a substantially continuous manner in synchronisation with the drift of ions through the first device (4) so as to progressively increase said minimum value so that multiply charged ions are onwardly transmitted in preference to singly charged ions.

2. A method as claimed in claim 1, wherein said multiply charged ions are selected from the group consisting of: (i) doubly charged ions; (ii) triply charged ions; (iii) quadruply charged ions; and (iv) ions having five or more charges.

3. A method as claimed in any preceding claim, wherein said first device (4) comprises an ion mobility spectrometer.

4. A method as claimed in claim 3, wherein said ion mobility spectrometer comprises a plurality of electrodes having apertures wherein a DC voltage gradient is maintained across at least a portion of said ion mobility spectrometer and at least some of said electrodes are connected to an AC or RF voltage supply.

5. A method as claimed in claim 3, wherein said ion mobility spectrometer comprises a Field Asymmetric Ion Mobility Spectrometer ("FAIMS").

6. A method as claimed in claim 3, wherein said ion mobility spectrometer comprises a drift tube together with one or more electrodes for maintaining an axial DC voltage gradient along at least a portion of said drift tube.

7. A method as claimed in any preceding claim, wherein said step of providing a pulse of ions comprises providing a pulsed ion source.

8. A method as claimed in claim 7, wherein said pulsed ion source is selected from the group consisting of: (i) a Matrix Assisted Laser Desorption Ionisation ("MALDI") ion source; and (ii) a Laser Desorption Ionisation ion source.

9. A method as claim in any of claims 1-6, wherein said step of providing a pulse of ions comprises providing a continuous ion source and an ion trap for storing ions and periodically releasing ions.

10. A method as claimed in claim 9, wherein said continuous ion source is selected from the group consisting of: (i) an Electrospray ion source; (ii) an Atmospheric Pressure Chemical Ionisation ("APCI") ion source; (iii) an Electron Impact ("EI") ion source; (iv) an Atmospheric Pressure Photon Ionisation ("APPI") ion source; and (v) a Chemical Ionisation ("CI") ion source.

11. A method as claimed in any preceding claim, further comprising providing a collision cell (6) wherein in one mode of operation at least some ions entering said collision cell (6) are caused to fragment.

12. A method as claimed in any preceding claim, further comprising providing an orthogonal acceleration time of flight mass analyser (11).

13. A mass spectrometer comprising:
a first device (4) for temporally separating ions according to their ion mobility;
a second device comprising a quadrupole rod set mass filter (5) for mass filtering at least some of said ions according to their mass to charge ratio; and
a controller;
**characterised in that** said controller is arranged to:
(i) operate said quadrupole rod set mass filter as a high pass mass to charge ratio filter so as to substantially only transmit ions having a mass to charge ratio greater than a minimum value; and
(ii) progressively vary a mass filtering characteristic of said quadrupole rod set mass filter (5) by scanning said quadrupole rod set mass filter in a substantially continuous manner in synchronisation with the drift of ions through the first device (4) so as to progressively increase said minimum value so that multiply charged ions are onwardly transmitted in preference to singly charged ions.

14. A mass spectrometer as claimed in claim 13, wherein said multiply charged ions are selected from the group consisting of: (i) doubly charged ions; (ii) triply charged ions; (iii) quadruply charged ions; and (iv) ions having five or more charges.

15. A mass spectrometer as claimed in claim 13 or 14, wherein said first device (4) comprises an ion mobility spectrometer.

16. A mass spectrometer as claimed in claim 15, wherein said ion mobility spectrometer comprises a plurality of electrodes having apertures wherein a DC voltage gradient is maintained across at least a portion of said ion mobility spectrometer and at least some of said electrodes are connected to an AC or RF voltage supply.

17. A mass spectrometer as claimed in claim 15, wherein said ion mobility spectrometer comprises a Field Asymmetric Ion Mobility Spectrometer ("FAIMS").

18. A mass spectrometer as claimed in claim 15, wherein said ion mobility spectrometer comprises a drift tube together with one or more electrodes for maintaining an axial DC voltage gradient along at least a portion of said drift tube.

19. A mass spectrometer as claimed in any of claims 13-18, further comprising a pulsed ion source.

20. A mass spectrometer as claimed in claim 19, wherein said pulsed ion source is selected from the group consisting of: (i) a Matrix Assisted Laser Desorption Ionisation ("MALDI") ion source; and (ii) a Laser Desorption Ionisation ion source.

21. A mass spectrometer as claim in any of claims 13-18, further comprising a continuous ion source and an ion trap for storing and periodically releasing ions.

22. A mass spectrometer as claimed in claim 21, wherein said continuous ion source is selected from the group consisting of: (i) an Electrospray ion source; (ii) an Atmospheric Pressure Chemical Ionisation ("APCI") ion source; (iii) an Electron Impact ("EI") ion source; (iv) an Atmospheric Pressure Photon Ionisation ("APPI") ion source; and (v) a Chemical Ionisation ("CI") ion source.

23. A mass spectrometer as claimed in any of claims 13-22, further comprising a collision cell (6) wherein in one mode of operation at least some ions entering said collision cell (6) are caused to fragment.

24. A mass spectrometer as claimed in any of claims 13-23, further comprising an orthogonal acceleration time of flight mass analyser (11).

## Patentansprüche

1. Verfahren zur Massenspektrometrie, umfassend:
Bereitstellen eines Impulses von Ionen und Ausführen der folgenden Schritte vor dem Bereitstellen eines weiteren Impulses von Ionen:
(a) vorübergehendes Trennen mindestens einiger der Ionen gemäß ihrer Ionenmobilität in einer ersten Einrichtung (4);
(b) Massenfilterung mindestens einiger der Ionen gemäß ihrem Masse-Ladungs-Verhältnis in einer zweiten Einrichtung umfassend einen Quadrupol-Stabsatz-Massenfilter (5);
**dadurch gekennzeichnet, daß** das Verfahren weiterhin folgendes umfaßt:
(c) Betreiben des Quadrupol-Massenfilters als ein Masse-Ladungs-Verhältnis-Hochpaßfilter, um im wesentlichen nur Ionen mit einem Masse-Ladungs-Verhältnis größer als ein Mindestwert zu übertragen; und
(d) progressives Variieren einer Massenfilterungscharakteristik der zweiten Einrichtung (5) durch Scannen des Quadrupol-Massenfilters auf im wesentlichen kontinuierliche Weise in Synchronisation mit der Drift von Ionen durch die erste Einrichtung (4), um den Mindestwert progressiv zu erhöhen, so daß mehrfach geladene Ionen in Präferenz zu einfach geladenen Ionen weiter übertragen werden.

2. Verfahren nach Anspruch 1, wobei die mehrfach geladenen Ionen ausgewählt sind aus der Gruppe bestehend aus: (i) doppelt geladenen Ionen; (ii) dreifach geladenen Ionen; (iii) vierfach geladenen Ionen und (iv) Ionen mit fünf oder mehr Ladungen.

3. Verfahren nach einem vorhergehenden Anspruch, wobei die erste Einrichtung (4) ein Ionenmobilitätsspektrometer umfaßt.

4. Verfahren nach Anspruch 3, wobei das Ionenmobilitätsspektrometer mehrere Elektroden mit Blenden umfaßt, wobei über mindestens einen Abschnitt des Ionenmobilitätsspektrometers ein Gleichspannungsgradient aufrechterhalten wird und mindestens einige der Elektroden an eine Wechselstrom- oder Hochfrequenzspannungsversorgung angeschlossen sind.

5. Verfahren nach Anspruch 3, wobei das Ionenmobilitätsspektrometer ein FAIMS (Field Asymmetric Ion Mobility Spectrometer) umfaßt.

6. Verfahren nach Anspruch 3, wobei das Ionenmobilitätsspektrometer ein Driftrohr zusammen mit einer oder mehreren Elektroden umfaßt, um entlang mindestens einem Abschnitt des Driftrohrs einen axialen Gleichspannungsgradienten aufrechtzuerhalten.

7. Verfahren nach einem vorhergehenden Anspruch, wobei der Schritt des Bereitstellens eines Impulses von Ionen das Bereitstellen einer gepulsten Ionenquelle umfaßt.

8. Verfahren nach Anspruch 7, wobei die gepulste Ionenquelle ausgewählt ist aus der Gruppe bestehend aus: (i) einer MALDI-Ionenquelle (Matrix Assisted Laser Desorption Ionisation) und (ii) einer Laserdesorptionsionisations-Ionenquelle.

9. Verfahren nach einem der Ansprüche 1-6, wobei der Schritt des Bereitstellens eines Impulses von Ionen das Bereitstellen einer kontinuierlichen Ionenquelle und einer Ionenfalle zum Speichern von Ionen und periodischen Freigeben von Ionen umfaßt.

10. Verfahren nach Anspruch 9, wobei die kontinuierliche Ionenquelle ausgewählt ist aus der Gruppe bestehend aus: (i) einer Elektrospray-Ionenquelle; (ii) einer APCI-Ionenquelle (Atmospheric Pressure Chemical Ionisation); (iii) einer EI-Ionenquelle (Electron Impact); (iv) einer APPI-Ionenquelle (Atmospheric Pressure Photon Ionisation und (v) einer CI-Ionenquelle (Chemical Ionisation).

11. Verfahren nach einem vorhergehenden Anspruch, weiterhin umfassend das Bereitstellen einer Kollisionszelle (6), wobei bei einem Betriebsmodus mindestens einige der die Kollisionszelle (6) betretenden Ionen zum Fragmentieren veranlaßt werden.

12. Verfahren nach einem vorhergehenden Anspruch, weiterhin umfassend das Bereitstellen eines Orthogonal-Acceleration-Time-of-Flight-Massenanalysators (11).

13. Massenspektrometer, umfassend:
eine erste Einrichtung (4) zum vorübergehenden Trennen von Ionen gemäß ihrer Ionenmobilität;
eine zweite Einrichtung umfassend einen Quadrupol-Stabsatz-Massenfilter (5) zum Massenfiltern mindestens einiger der Ionen gemäß ihrem Masse-Ladungs-verhältnis; und
einen Kontroller;
**dadurch gekennzeichnet, daß** der Kontroller für folgendes ausgelegt ist:
(i) Betreiben des Quadrupol-Stabsatz-Massenfilters als ein Masse-Ladungs-Verhältnis-Hochpaßfilter, um im wesentlichen nur Ionen mit einem Masse-Ladungs-Verhältnis größer als ein Mindestwert zu übertragen; und
(ii)progressives Variieren einer Massenfilterungscharakteristik des Quadrupol-Stabsatz-Massenfilters (5) durch Scannen des Quadrupol-Stabsatz-Massenfilters auf im wesentlichen kontinuierliche Weise in Synchronisation mit der Drift von Ionen durch die erste Einrichtung (4), um den Mindestwert progressiv zu erhöhen, so daß mehrfach geladene Ionen in Präferenz zu einfach geladenen Ionen weiter übertragen werden.

14. Massenspektrometer nach Anspruch 13, wobei die mehrfach geladenen Ionen ausgewählt sind aus der Gruppe bestehend aus: (i) doppelt geladenen Ionen; (ii) dreifach geladenen Ionen; (iii) vierfach geladenen Ionen und (iv) Ionen mit fünf oder mehr Ladungen.

15. Massenspektrometer nach Anspruch 13 oder 14, wobei die erste Einrichtung (4) ein Ionenmobilitätsspektrometer umfaßt.

16. Massenspektrometer nach Anspruch 15, wobei das Ionenmobilitätsspektrometer mehrere Elektroden mit Blenden umfaßt, wobei über mindestens einen Abschnitt des Ionenmobilitätsspektrometers ein Gleichspannungsgradient aufrechterhalten wird und mindestens einige der Elektroden an eine Wechselstrom- oder Hochfrequenzspannungsversorgung angeschlossen sind.

17. Massenspektrometer nach Anspruch 15, wobei das Ionenmobilitätsspektrometer ein FAIMS (Field Asymmetric Ion Mobility Spectrometer) umfaßt.

18. Massenspektrometer nach Anspruch 15, wobei das Ionenmobilitätsspektrometer ein Driftrohr zusammen mit einer oder mehreren Elektroden umfaßt, um entlang mindestens einem Abschnitt des Driftrohrs einen axialen Gleichspannungsgradieriten aufrechtzuerhalten.

19. Massenspektrometer nach einem der Ansprüche 13-18, weiterhin umfassend eine gepulste Ionenquelle.

20. Massenspektrometer nach Anspruch 19, wobei die gepulste Ionenquelle ausgewählt ist aus der Gruppe bestehend aus: (i) einer MALDI-Ionenquelle (Matrix Assisted Laser Desorption Ionisation) und (ii) einer Laserdesorptionsiönisations-Ionenquelle.

21. Massenspektrometer nach einem der Ansprüche 13-18, weiterhin umfassend eine kontinuierliche Ionenquelle und eine Ionenfalle zum Speichern und periodischen Freigeben von Ionen.

22. Massenspektrometer nach Anspruch 21, wobei die kontinuierliche Ionenquelle ausgewählt ist aus der Gruppe bestehend aus: (i) einer Elektrospray-Ionenquelle; (ii) einer APCI-Ionenquelle (Atmospheric Pressure Chemical Ionisation); (iii) einer EI-Ionenquelle (Electron Impact); (iv) einer APPI-Ionenquelle (Atmospheric Pressure Photon Ionisation und (v) einer CI-Ionenquelle (Chemical Ionisation).

23. Massenspektrometer nach einem der Ansprüche 13-22, weiterhin umfassend eine Kollisionszelle (6), wobei bei einem Betriebsmodus mindestens einige der die Kollisionszelle (6) betretenden Ionen zum Fragmentieren veranlaßt werden.

24. Massenspektrometer nach einem der Ansprüche 13-23, weiterhin umfassend einen Orthogonal-Acceleration-Time-of-Flight-Massenanalysator (11).

## Revendications

1. Procédé de spectrométrie de masse, consistant à :
produire une impulsion d'ions et exécuter les étapes suivantes avant de produire une autre impulsion d'ions :
(a) séparer temporellement au moins certains desdits ions en fonction de leur mobilité ionique dans un premier dispositif (4) ;
(b) soumettre à un filtrage de masse au moins certains desdits ions en fonction de leur rapport masse à charge dans un second dispositif comprenant un filtre de masse à jeu de barres quadripolaires (5) ;
**caractérisé en ce que** ledit procédé consiste en outre à :
(c) faire fonctionner ledit filtre de masse quadripolaire en tant que filtre de rapport de masse à charge passe-haut afin de ne transmettre sensiblement que des ions ayant un rapport de masse à charge supérieur à une valeur minimale ; et
(d) faire varier progressivement une caractéristique de filtrage de masse dudit second dispositif (5) en faisant en sorte que ledit filtre de masse quadripolaire effectue une analyse d'une manière sensiblement continue en synchronisme avec la dérive d'ions à travers le premier dispositif (4) de façon à faire croître progressivement ladite valeur minimale afin que des ions multi-chargés soient transmis vers l'avant préférentiellement à des ions chargés une fois.

2. Procédé selon la revendication 1, dans lequel lesdits ions multi-chargés sont sélectionnés dans le groupe constitué (i) d'ions doublement chargés ; (ii) d'ions triplement chargés ; (iii) d'ions quadruplement chargés ; et (iv) d'ions chargés cinq fois ou plus.

3. Procédé selon l'une quelconque des revendications précédentes, dans lequel ledit premier dispositif (4) comprend un spectromètre à mobilité ionique.

4. Procédé selon la revendication 3, dans lequel ledit spectromètre à mobilité ionique comprend une pluralité d'électrodes ayant des ouvertures, dans lequel un gradient de tension continue est maintenu aux bornes d'au moins une partie dudit spectromètre à mobilité ionique et dans lequel au moins certaines desdites électrodes sont connectées à une alimentation à tension alternative ou RF.

5. Procédé selon la revendication 3, dans lequel ledit spectromètre à mobilité ionique comprend un Spectromètre à Mobilité Ionique à Asymétrie de Champ ("FAIMS").

6. Procédé selon la revendication 3, dans lequel ledit spectromètre à mobilité ionique comprend un tube de dérive associé à une ou plusieurs électrodes destinées à maintenir un gradient de tension continue axial le long d'au moins une partie dudit tube de dérive.

7. Procédé selon l'une quelconque des revendications précédentes, dans lequel ladite étape consistant à produire une impulsion d'ions consiste à produire une source d'ions pulsée.

8. Procédé selon la revendication 7, dans lequel ladite source d'ions pulsée est sélectionnée dans le groupe constitué (i) d'une source d'ions à Désorption-Ionisation Laser Assistée par Matrice ("MALDI") ; et (ii) d'une source d'ions à Désorption-Ionisation Laser.

9. Procédé selon l'une quelconque des revendications 1 à 6, dans lequel ladite étape consistant à produire une impulsion d'ions consiste à produire une source d'ions continue et un piège à ions permettant de stocker des ions et de libérer périodiquement des ions.

10. Procédé selon la revendication 9, dans lequel ladite source d'ions continue est sélectionnée dans le groupe constitué : (i) d'une source d'ions du type Electrospray ; (ii) d'une source d'ions à Ionisation Chimique à Pression Atmosphérique ("APCI") ; (iii) d'une source d'ions à Impact Electronique ("EI") ; (iv) d'une source d'ions à Photo-Ionisation à Pression Atmosphérique ("APPI") ; et (v) d'une source d'ions à Ionisation Chimique ("CI").

11. Procédé selon l'une quelconque des revendications précédentes, consistant en outre à utiliser une cellule de collision (6) dans laquelle, dans un mode de fonctionnement, au moins certains ions pénétrant dans ladite cellule de collision (6) sont amenés à se fragmenter.

12. Procédé selon l'une quelconque des revendications précédentes, consistant en outre à utiliser un analyseur de masse à temps de vol à accélération orthogonale (11).

13. Spectromètre de masse, comprenant :
un premier dispositif (4) destiné à séparer temporellement des ions en fonction de leur mobilité ionique ;
un second dispositif comprenant un filtre de masse à jeu de barres quadripolaires (5) destiné à soumettre à un filtrage de masse au moins certains desdits ions en fonction de leur rapport massé à charge ; et
une unité de commande ;
**caractérisé en ce que** ladite unité de commande est conçue pouf :
(i) faire fonctionner ledit filtre de masse à jeu de barres quadripolaires en tant que filtre de rapport masse à charge passe-haut afin de ne transmettre sensiblement que des ions ayant un rapport masse à charge supérieur à une valeur minimale ; et
(ii) faire varier progressivement une caractéristique de filtrage de masse dudit filtre de masse à jeu de barres quadripolaires (5) en faisant en sorte que ledit filtre de masse à jeu de barres quadripolaires effectue une analyse d'une manière sensiblement continue en synchronisme avec la dérive d'ions à travers le premier dispositif (4) de façon à faire croître progressivement ladite valeur minimale afin que des ions multi-chargés soient transmis vers l'avant préférentiellement à des ions chargés une fois.

14. Spectromètre de masse selon la revendication 13, dans lequel lesdits ions multi-chargés sont sélectionnés dans le groupe constitué (i) d'ions doublement chargés ; (ii) d'ions triplement chargés ; (iii) d'ions quadruplement chargés ; et (iv) d'ions chargés cinq fois ou plus.

15. Spectromètre de masse selon la revendication 13 ou 14, dans lequel ledit premier dispositif (4) comprend un spectromètre à mobilité ionique.

16. Spectromètre de masse selon la revendication 15, dans lequel ledit spectromètre à mobilité ionique comprend une pluralité d'électrodes ayant des ouvertures, dans lequel un gradient de tension continue est maintenu aux bornes d'au moins une partie dudit spectromètre à mobilité ionique et dans lequel au moins certaines desdites électrodes sont connectées à une alimentation à tension alternative ou RF.

17. Spectromètre de masse selon la revendication 15, dans lequel ledit spectromètre à mobilité ionique comprend un Spectromètre à Mobilité Ionique à Asymétrie de Champ ("FAIMS").

18. Spectromètre de masse selon la revendication 15, dans lequel ledit spectromètre à mobilité ionique comprend un tube de dérive associé à une ou plusieurs électrodes destinées à maintenir un gradient de tension continue axial le long d'au moins une partie dudit tube de dérive.

19. Spectromètre de masse selon l'une quelconque des revendications 13 à 18, comprenant en outre une source d'ions pulsée.

20. Spectromètre de masse selon la revendication 19, dans lequel ladite source d'ions pulsée est sélectionnée dans le groupe constitué (i) d'une source d'ions à Désorption-Ionisation Laser Assistée par Matrice ("MALDI") ; et (ii) d'une source d'ions à Désorption-Ionisation Laser.

21. Spectromètre de masse selon l'une quelconque des revendications 13 à 18, comprenant en outre une source d'ions continue et un piège à ions permettant de stocker et de libérer périodiquement des ions.

22. Spectromètre de masse selon la revendication 21, dans lequel ladite source d'ions continue est sélectionnée dans le groupe constitué : (i) d'une source d'ions du type Electrospray ; (ii) d'une source d'ions à Ionisation Chimique à Pression Atmosphérique ("APCI") ; (iii) d'une source d'ions à Impact Electronique ("EI") ; (iv) d'une source d'ions à Photo-Ionisation à Pression Atmosphérique ("APPI") ; et (v) d'une source d'ions à Ionisation Chimique ("CI").

23. Spectromètre de masse selon l'une quelconque des revendications 13 à 22, comprenant en outre une cellule de collision (6) dans laquelle, dans un mode de fonctionnement, au moins certains ions pénétrant dans ladite cellule de collision (6) sont amenés à se fragmenter.

24. Spectromètre de masse selon l'une quelconque des revendications 13 à 23, comprenant en outre un analyseur de masse à temps de vol à accélération orthogonale (11).
